# EUROPEAN PATENT SPECIFICATION

(11) **EP 0 785 891 B1**
(45) Date of publication and mention of the grant of the patent: **15.09.1999**
(21) Application number: 95934240.3
(22) Date of filing: 19.10.1995
(51) Int. Cl.: B65B 55/19, B65D 81/26, A23L 3/3436

(54) **INHIBITION OF THE GROWTH OF MICRO-ORGANISMS**
INHIBIERUNG DES WACHSTUMS VON MICRO-ORGANISMEN
INHIBITION DE LA CROISSANCE DE MICRO-ORGANISMES

(30) Priority: 19.10.1994 GB 9421123
(43) Date of publication of application: 30.07.1997
(73) Proprietor: TIEDEMANNS-JOH. H. ANDRESEN ANS, 0655 Oslo 6 (NO)
(72) Inventor: ULRICHSEN, Borre, Bengt, N-0376 Oslo (NO); CASTBERG, Helge, Bakketun, N-1410 Kolbotn (NO); JOHNSTONE, Keith, Cambridge CB2 1NN (GB)
(74) Representative: Burrows, Anthony Gregory
(86) International application number: GB9502469
(87) International publication number: WO9612646

(56) References cited:
- EP-A- 0 066 199
- EP-A- 0 083 826
- EP-A- 0 305 005
- EP-A- 0 326 464
- EP-A- 0 384 541
- EP-A- 0 466 515
- EP-A- 0 519 616
- EP-A- 0 542 686
- WO-A-90/00504
- BE-A- 1 004 320

## Description

This invention relates to the inhibition of the growth of micro-organisms, and concerns in particular the inhibition of micro-organisms in contact with non-sterile liquid media. More specifically still, it pertains to effecting such inhibition by the use of an oxygen scavenger to remove virtually all of the free molecular oxygen from the container in which the liquid is stored.

In packaging oxygen-sensitive materials such as foodstuffs, *e.g.* beverages, and pharmaceuticals (collectively "products"), oxygen contamination can be particularly troublesome. Care is generally taken to minimize introduction of oxygen or to reduce the undesirable effects of oxygen on the product.

A number of strategies exist to deal with oxygen as a contaminant. The most basic is simply to remove oxygen from the product by vacuum, by inert gas sparging, or both. Such systems are used in the orange juice and brewing industries, and in modified-atmosphere packaging of food products. This technology, while somewhat equipment intensive, can remove about 90-95% of the oxygen present in air from the product (or its container) prior to or during packaging. However, the removal of the remaining 5-10% of oxygen requires longer times for vacuum treatment and/or sparging and increasingly larger volumes of higher and higher purity inert gas which must not itself be contaminated with trace levels of oxygen. This makes the removal of the last traces of oxygen expensive. A further disadvantage of these methods is a tendency to remove volatile product components. This is a particular problem with foods, *e.g.* beverages, wherein such components are often responsible for some or all of the aroma and flavour.

Herein, the term "oxygen scavenger" means that which can:
a) remove molecular oxygen from the interior of a closed container by reacting or combining with entrapped oxygen or with oxygen that is leaking into the container; or
b) remove molecular oxygen which would otherwise perfuse into the closed container, for example by incorporation of the oxygen scavenger into material of which the container is made, *e.g.* by incorporation of the oxygen scavenger into one or more layers of a multilayer container construction.

The term "antioxidants" as used herein means materials, *e.g.* compounds which, when added to the product, *e.g.* beverage, itself, slow the rate of oxidation or otherwise reduce the undesirable effects of oxidation upon the product.

By the term "complex medium" as used herein is meant any medium able to support the growth of micro-organisms with the medium having the following characteristics: the carbon and nitrogen sources present for growth are not solely simply carbohydrates and amino acids but comprise one or more compounds which are, for example, carbohydrates, polysaccharides, proteins, peptides, lipids, oils, organic acids, vitamins and co-factors which may be present as, or derived from, nutrient-rich, undefined compositions, for example plant- or animal-produced fluids, plant- or animal-tissue extracts, or tissue hydrolysates.

It has been known since the 1930's that oxygen in beer adversely affects its flavour and stability. Amounts of oxygen as low as 0.1 to 0.2 ml per 355 ml container will, over time, cause darkening of the beer, an increase in chill-haze values and significant taste changes. The effect of oxygen on beer is so strongly detrimental that many brewers go to great lengths to remove it from the bottle during filling. The total 0₂ concentration of about 200-400 parts per billion achieved in the bottle headspace by careful brewers corresponds to approximately 50-100 microlitres of oxygen per 355 ml bottle. Even this small quantity of oxygen is still considered to be one of the major limitations on quality and shelf life of beer.

Many other food products suffer similar oxygen-mediated degradation; for example, individual portions of prepared foods are marketed in containers made of plastics, and air entrapped therein, and leaking or perfusing into the package after processing, is an acknowledged industry problem. This leakage or perfusion is often especially true for containers made entirely of plastics, because many plastics with otherwise desirable properties are relatively permeable to oxygen.

None of the above techniques removes or controls (a) oxygen dissolved in the product (which will outgas into the headspace as the enclosed system comes to equilibrium), or (b) oxygen leakage into the package.

Antioxidants (such as sulphur dioxide, trihydroxy butyrophenone, butylated hydroxy toluene and butylated hydroxy anisole) and oxygen scavengers (such as ascorbic acid, *iso*ascorbic acid and glucose oxidase-catalase) have been used in an attempt to reduce the effects of oxygen contamination on beer. The direct addition of such agents into beer has several disadvantages. Both sulphur dioxide and ascorbates, when added to beer, can result in production of off-flavours. Also, direct addition of such compounds to a food requires stating on the label that the product contains the additive. This is undesirable in today's era of "fresh" and "all-natural" products.

It is also known to prepare plastic containers (*e.g.*, for beer, other beverages and various other foods) wherein a wall consists of, or includes, a layer which comprises a polymer, an oxidizable component having oxygen-scavenging properties, and a metal catalyst, for binding any oxygen penetrating the container wall (see, *e.g.*, EP-A-301,719). Also, US-A-4,048,361 discloses a food container having at least one barrier layer which contains an oxygen "getter," while US-A-3,586,514 discloses a thin wall polyvinyl chloride (PVC) container wherein the plastic contains an antioxidizing agent to reduce oxygen permeability therethrough, and JP-A-58-160,344 discloses hollow mouldings of a polyethylene terephthalate (PET) with a meta-xylene group containing polyamide resin. The containers of these references are described as oxygen barriers which prevent or reduce the transmission of oxygen through the wall and into the container. Such containers are generally more expensive than glass containers and are less likely to be recycled than glass or aluminium containers.

Attempts have been made to incorporate oxygen scavenging systems in a container crown or closure. For example, US-A-4,279,350 discloses a closure liner which incorporates a catalyst disposed between an oxygen permeable barrier and a water absorbent backing layer. Another closure disclosed in GB-A-2,040,889 is a stopper moulded from ethylene vinyl acetate (EVA) having a closed-cell foamed core (which may contain water and sulphur dioxide to act as an oxygen scavenger) and a liquid impervious skin. Also, EP-A-328,336 discloses a preformed container closure element, such as a cap, removable panel or liner, formed of a polymeric matrix containing an oxygen scavenger. Preferred scavengers include ascorbates or *iso*ascorbates, and their scavenging properties are activated by pasteurizing or sterilizing the element after it has been fitted onto a filled container. Similarly, EP-A-328,337 discloses a sealing composition for a container closure comprising a polymeric matrix material which is modified by the inclusion of an oxygen scavenger. Such composition may be in fluid or meltable form for application to a closure or to be present as a deposit on the closure in the form of a closure gasket. Ascorbates or *iso*ascorbates, alone or in combination with sulphites, are preferred oxygen scavengers. Again, the scavenging properties of these compounds are activated by pasteurizing or sterilizing the composition when sealing the container.

Both iron powder and ferrous oxide have been used commercially as oxygen scavengers for food. They are currently manufactured for this purpose in sachets by a number of firms including Mitsubishi Gas Chemical, Inc., which markets it in a product known as AGELESS (see, *e.g.*, *European Packaging Newsletter and World Report*, vol. 21, No. 7, July, 1988). Other manufacturers of sachets containing iron powder include Multiform Desiccants Inc., who produce sachets under the tradename FRESHPAX (as mentioned in GB-A 2,228,857) and Hsaio Sung, who produce sachets under the brand name O'BUSTER (see, *e.g.*, *Asia Pacific Food Industry*, November 1994, page 16). Such products may also contain ascorbates as an oxygen scavenging agent, as per US-A-4,752,002. Other oxygen scavengers are disclosed in US-A-4,524,015 and US-A-4,384,972.

US-A-4,536,409 and 4,702,966 each disclose a multilayer wall construction for a polymeric container used to pack comestibles, wherein outer and inner layers are structural and protective layers: positioned therebetween are materials designed to control the unwanted permeation of oxygen. At elevated temperatures, the outer and inner layers permit water vapour to permeate into the oxygen absorbing system to trigger such system to an active state.

Materials are known which can rapidly reduce oxygen levels inside a package of products which are wet or moist (or which are capable of generating moisture inside their container) without adversely changing taste, aroma, or functionality of such packaged foodstuffs, *e.g.* beverages, and pharmaceuticals. Persons skilled in the art have considered the addition of various agents into the container of such products in an attempt to meet this need, for example as disclosed in JP-A-61-238,836 and JP-A-54-022,281.

"Amine + metal" complexes, - *e.g.* as disclosed in US-A-4959135 and US-A-4952289 - can bind ligands such as oxygen and can be used as oxygen scavengers in packaging. The complexes either do not form or do not become activated (*i.e.*, cannot, or do not, bind oxygen) until the amine and metal are together exposed to water or water vapour. The ingredients of the complex can be mixed and used either free, or immobilized on or within a support *inter alia*, on or mixed with silicone rubber or with a polymer such as PVC, EVA, polypropylene (PP), PE or polyurethane.

US-A-4,287,995 discloses a cap or stopper for a container used to preserve aqueous liquids. The cap or stopper carries a sealing member which contains oxygen absorbent separated from contacting the contents of the container by a film which is gas-permeable but water-impermeable. A similar cap system is disclosed in US-A-4,756,436.

In order to preserve foodstuffs, such as vegetables, fish, shellfish, meats, processed foodstuffs, such as potato chips, cakes, peanuts, *etc.*, it is necessary to prevent the foodstuffs from becoming mouldy and from putrefying. Prior art methods have used freezer storage, cold storage, vacuum packaging and replacing the gas present in the inner part of packaging by an inert gas, to prevent foodstuffs from becoming mouldy and putrefying. Additives, such as antioxidants, have been used for preserving foodstuffs. Recently, governments have started to regulate the use of additives in food, since some additives are injurious to humans. The freezer storage method, requiring large-scale apparatus and complicated operation, is costly.

Moulds or eumycetes, bacteria and higher organisms, such as insects, tend to disturb preservation of foodstuffs. These insects, moulds or eumycetes, and most bacteria require oxygen to live and grow and cause putrefaction and change in quality of foodstuffs.

Therefore, if oxygen can be selectively removed from the atmosphere in which the foodstuffs are packed, the problem of putrefaction and change in quality of foodstuffs can be overcome, and it will become possible to preserve foodstuffs for a long time.

JP-A-19729/1972 discloses the use of an oxygen scavenger to preserve vegetables by removing oxygen from the enclosed atmosphere. US-A-2,825,651; US-A-4,127,503 and GB-A-533,991 disclose other forms of oxygen scavenger.

EP-A-0,466,515 discloses an oxygen scavenger comprising an oxygen absorbing composition and an oxygen permeable film covering the oxygen absorbing composition. The film includes an asymmetric porous membrane whose outer surface in the thickness direction is formed as a dense skin. The dense skin has a sufficiently high barrier property to liquids but still retains a high oxygen permeability. The oxygen scavenger, in use for the preservation of beverages, is described as used to prevent the chemical deterioration of the substances packaged by oxidation. Such beverages that are disclosed as suitable for protection by the oxygen scavenger include liquids, fluid foods, foods containing water, fresh juice such as tomato juice, and alcohol. Suitable containers for the oxygen scavenger include glass or plastic bins, bottles, cans and bags. The oxygen scavenger is disclosed as being either in direct contact with the substance to be protected or separated from the substance by a short distance. When the oxygen scavenger was used in an example involving orange juice in a sealed bottle with the oxygen scavenger in the cap of the bottle, the oxygen content was less than .5% after three days and less than 1% after three months. The use of AGELESS as an oxygen scavenger is disclosed.

BE-A-1,004,320 discloses a system of enzymic oxygen scavenging in the head space of a container. The enzyme that absorbs the oxygen is immobilized and in contact with the gaseous phase of the container's contents. The method of providing an oxygen scavenger is disclosed as utilised to preserve the organoleptic qualities of the container's contents. This scavenger is disclosed as being suitable for beer, fruit and vegetable juices, and milk. Suitable containers for the scavenger include bottles, metallic cans and paraffinated cartons.

A particular problem with non-aseptically packaged and/or minimally processed (including freshly squeezed) fruit juices is that they contain significant populations of micro-organisms which reduce their shelf life. Furthermore, pasteurized juices may become contaminated with micro-organisms during packaging owing to contamination either from the air or on the packaging material itself.

I. Sagi and C. H. Mannheim, "The Effect of Enzymatic Oxygen Removal on Quality of Unpasteurized and Pasteurized Orange Juice", Journal of Food Processing and Preservation 14 (1990) 253-266, disclose that citrus juices lose their typical aroma shortly after extraction and that, since the presence of oxygen is known to affect the flavour of heat-processed citrus juices, the effect of enzymatic deoxygenation, with glucose oxidase-catalase preparations, immediately after juice extraction on kinetics of oxygen removal and on quality of fresh and pasteurized orange juice was investigated. They found that enzyme preparations reduced dissolved oxygen in fresh orange juice to less than 1 ppm in about 30 min at room temperature. In fresh juices microbial growth was delayed and shelf-life of these juices was increased. In pasteurized juices no improvement was observed. However, the system again involved the use of additives, in the form of the glucose oxidase-catalase preparations, which also chemically modified the juice.

According to one aspect of the present invention there is provided a method of inhibiting the growth of facultatively anaerobic micro-organisms in contact with a non-sterile liquid complex medium enclosed so as to be substantially out of contact with the ambient atmosphere, the method comprising using an oxygen scavenger to scavenge virtually all free molecular oxygen from within the enclosure.

Micro-organisms may be characterised by reference to whether, and how, oxygen is involved in their metabolism. Aerobic micro-organisms, such as the many species of *Aspergillus* and *Penicillium*, need oxygen to live and multiply. Anaerobic micro-organisms are actually killed by oxygen, and can only survive in its absence. Facultatively anaerobic micro-organisms are a halfway class; they are commonly thought not to need oxygen for their metabolic processes, and yet they are not actually poisoned by oxygen, and so can exist in the presence thereof. The method of the invention is for use in the control of facultatively anaerobic micro-organisms, - typical examples of which are many of the yeasts (such as *Saccharomyces*) naturally occurring in or in connection with foodstuffs.

The non-sterile liquid complex medium may be any of a wide variety of both foodstuff and non-foodstuff liquids. For example, it may be an animal product, such as milk or some milk-derived substance (in which facultatively anaerobic members of the *Enterobacteriaceae* are often found), or a fruit juice (in which the facultatively anaerobic micro-organism *Saccharomyces* is often found). The primary use of the invention is to control micro-organisms in foodstuff liquids such as milk and fruit juice, and a number of Examples of this are given hereinafter. The fruit juice may comprise grapefruit juice, pineapple juice, tomato juice, grape juice, or orange juice, or a mixture thereof. In particular the fruit juice may be orange juice, grape juice or tomato juice; quite unexpectedly it has been found experimentally that the use of an 0₂ scavenger in respect of these latter three gives a degree of growth inhibition significantly greater than that for apple juice, grapefruit juice or pineapple juice. Where the liquid medium is a milk or milk product it may be, or be made with, raw or pasteurized milk (the latter is not necessarily completely sterile).

The complex medium is non-sterile, by which is meant primarily that it has not been positively treated - by irradiation, for example, or by ultra-heat treatment - to kill all micro-organisms that may have been present prior to treatment. However, the method of the invention extends to cover inhibition of the growth of micro-organisms in liquids that may have started off sterile but then become non-sterile during some subsequent operation (the filling or enclosure step, perhaps). An instance of a common and well-known non-sterile liquid complex medium is a non-aseptically-packaged and/or minimally-processed fruit juice, for example fresh orange juice.

The invention is a method of inhibiting the growth of micro-organisms in contact with an enclosed liquid. Thus, the micro-organisms may be floating upon or within the liquid complex medium, may be at an inside surface of the enclosure, or may be within a head space of the enclosure.

The liquid complex medium is enclosed so as to be substantially out of contact with any ambient oxygen-containing atmosphere. The enclosure may take any form - it may, for example, be a container or a conduit for the complex medium - but the invention is particularly applicable to containers in the form of liquid packaging cartons made from a laminate comprising a paperboard layer and inner and outer thermoplastics layers, possibly with one or more oxygen or other barrier layers in the laminate. Oxygen scavengers which are self-activating can be provided in a head space of a container or in a screw or other cap thereof. Oxygen scavengers which are moisture-activated can be applied as part of the inner thermoplastics layer; thus, such moisture-activated oxygen scavengers can be applied to containers which will be stored before filling, so that the 0₂-scavenging capacity will not be lost during storage.

The actual material employed as the oxygen scavenger may be any such material suited to the liquid medium being protected from micro-organism growth. One common material is, as has been observed hereinbefore, ferrous oxide, which has for some time been successfully utilised commercially as an oxygen scavenger for solid food products, while another is iron powder. Ferrous oxide for scavenging purposes is currently manufactured in sachets by a number of firms including Mitsubishi Gas Chemical, Inc., who sell it under the Mark AGELESS. Other oxygen scavengers are ascorbates (as disclosed in the aforementioned US-A-4,752,002). Yet other oxygen scavengers, such as carbon black and alkali metal carbonates, are disclosed in the aforementioned US-A-4,524,015.

Although the oxygen scavenger could conceivably be added directly to the liquid medium, it is most preferably retained separately, and used in an immobilized form, to reduce the chance of it actually getting into, and possibly deleteriously affecting, the liquid medium. It may be immobilized in any appropriate form. For example, it may be attached to, or included within the material of, the or part of the interior surfaces of the container enclosing the liquid medium; indeed, a single inner layer of a laminated container material may serve two or more of the functions of oxygen scavenger and oxygen and liquid barrier. Alternatively, it may be provided as an insert to a cap or other member that sealingly closes the container.

The method of the invention is centred on the scavenging of molecular oxygen from the enclosure to maintain an atmosphere therein virtually free of molecular oxygen. The expression "virtually free" as applied to the molecular oxygen is not easy to define, and from one point of view may be said to be whatever is the oxygen concentration at which facultatively anaerobic micro-organism growth is in fact inhibited. This will actually vary quite considerably from micro-organism to micro-organism, although in general it will suffice to reduce the oxygen concentration to equal to 0.3% by volume, preferably 0.1% by volume (in any gas above the liquid, this is approximately equivalent to a concentration of 0.3mg/l, preferably 0.1mg/l within the liquid), and a concentration less than this is much preferred. It should here be emphasised that it is totally unexpected that the maintenance of an atmosphere virtually free of molecular oxygen should successfully inhibit the growth of facultatively anaerobic micro-organisms, which are reputed not to require any molecular oxygen for growth! This is one of the most interesting and important aspects of the invention; simply by both excluding and removing oxygen, the growth in liquid media of facultatively anaerobic micro-organisms (as well as aerobic micro-organisms) - and specifically a whole range of common and prevalent yeasts known for their significantly deleterious effect on foodstuffs - can cheaply and efficiently be significantly inhibited.

The method of the invention inhibits the growth of facultatively anaerobic micro-organisms by scavenging molecular oxygen from the enclosure. However, it is possible to employ at the same time other methods of micro-organism inhibition, and naturally one of the preferred additional methods is that involving contacting the non-sterile liquid medium with an antimicrobial substance, and specifically with an immobilized antimicrobial substance, which latter is of course greatly preferred because it can be placed in or adjacent the liquid medium with no, or no substantial, risk that the antimicrobial substance itself will migrate into, and possibly thereby contaminate, the liquid medium. The combination of both an oxygen scavenger and an antimicrobial agent extends the ability of the system so as to be effective in controlling the growth of anaerobic micro-organisms as well as facultatively anaerobic (and, of course, aerobic) micro-organisms. Typical antimicrobial substances are heavy metals, especially those, like silver, that are non-toxic to humans, while other useful antimicrobial agents are benzofuroxan, many tertiary and quaternary amines, and antibiotics such as Nystatin.

Like the oxygen scavenger, the antimicrobial substance is very preferably immobilised in any appropriate form. Thus, it too may be attached to, or included within the material of, the or part of the interior surfaces of the container enclosing the liquid medium, and indeed, a single inner layer of a laminated container material may serve two or more of the functions of oxygen scavenger, antimicrobial substance and oxygen and liquid barrier.

The combination of oxygen scavenger and antimicrobial agent may operate in merely an additive manner, but there are signs that some combinations exhibit a synergistic action (the combination together being more effective at controlling micro-organism growth than might be expected from a knowledge of the activities of the components separately). Indeed, it is a particularly advantageous feature of the invention that when utilising an oxygen scavenger together with an antimicrobial substance it is often possible to obtain very substantial micro-organism growth control with very small amounts of the two individual components - scavenger and antimicrobial agent - while to get such effective control with one only it would be necessary to employ that single component in such a manner - in such a high concentration, for example - that there would be a disadvantageous side-effect, such as a significant chance of the component leaching into the liquid medium, with possibly deleterious effects.

The use of both an oxygen scavenger and an antimicrobial substance is especially desirable when seeking to control facultatively anaerobic yeasts such as *Zygosaccharomyces bailli*, *Candida kruseii*, *Geotrichum candidans*, *Candida parapoiosis*, *Candida pseudotropicalis* and *Saccharomyces cerevisiae*.

The following Examples are now given, though by way of illustration only, to show details of the application of the invention.

### Evaluation of AGELESS Sachets, General Procedures

The effect of the commercially-available oxygen scavenging product AGELESS (hereinafter sometimes referred to as "AgL"), was tested on the growth of yeasts (and some other organisms) in fruit juices. Unless otherwise stated, the sachets were hung onto hooks in the insides of lids of sterile 500 ml Schott Duran glass bottles containing the juice being used as the non-sterile liquid complex medium, this juice being deliberately contaminated - inoculated - with the micro-organism to be controlled.

### Basic Test Procedure

400 ml juice were filled into each bottle, and the whole was subjected to a pre-deoxygenation treatment in which AgL sachets (2 x 100 ml 0₂ binding capacity: type SPU100) were placed in each bottle. After 24 h at 11°C, the sachets were replaced with a fresh pair before inoculation immediately prior to de-oxygenation proper, or before further incubation (in the case for supernatants (SNs)).

The oxygen concentration in the above-liquid gas within control test bottles was measured with an OXY-CHECK meter (as supplied by Temac Instruments, of Denmark), and was measured to be equal to or less than 0.1% following the de-oxygenation procedure.

### Examples

### Example 1: Growth study of aerobic fungi in orange juice in the presence of AGELESS sachets

### (i) Introduction

This experiment was performed to verify the expected effect of AGELESS sachets on the growth of a range of obligately aerobic fungi in a liquid complex medium (orange juice, from Sainsbury's). Depletion of oxygen by the sachets is expected to inhibit the growth of these organisms since their growth is dependent on the presence of molecular oxygen in the growth medium.

### (ii) Methods

1. The method for preparing the device for attaching AgL sachets was as given in the General Procedures above.
2. 300 ml of Sainsbury's OJ (sterile) were distributed and treated according to the basic test procedure outlined above - that is, the filled bottles were subjected to a pre-deoxygenation with 2 x 100 ml capacity AGELESS sachets which were replaced after 24 h at 11°C. After that, the media were inoculated to 100 cfu (colony forming units) ml⁻¹ with one or more of a range of fungi (see Table 1 hereafter).
   Controls were the same medium but without AGELESS.
3. Incubation was at 11°C until visible growth was observed in the controls for individual fungal species (the number of days' incubation for each fungus is shown in the Table). The contents of each bottle were then homogenised for 15secs with a sterile POLYTRON homogeniser operating at maximum speed, and the number of cfu/ml determined by viable counting of dilutions of the homogenate on MA (malt agar) medium.

### (iii) Results

1. Growth of all the fungi tested was inhibited by the presence of the AGELESS sachets, as is shown in the following Table 1.

**Table 1**

| Fungi | Incubation (days) | Growth (in cfus) | |
|---|---|---|---|
| | | with AgL | without AgL |
| *Penicillium* spp. | 21 | 2.2x10² | 1.0x10⁷ |
| *Aspergillus niger* | 54 | 0 | 9.3x10³ |
| *Trichoderma harzianum* | 26 | 2.1x10² | 8.9x10⁴ |
| *Botrytis cinerea* | 26 | 4.5x10¹ | 8.0x10⁵ |
| *Phoma exiguga* | 20 | 4.5x10¹ | 4.2x10⁴ |
| *Aureobasidium pullulans* | 33 | 8.7x10² | 1.2x10⁶ |

2. The growth inhibition observed was almost complete in all cases since the final cfu/ml was less than or only marginally greater than the controls for all of the fungal species tested. In the case of *Aspergillus niger*, cell death was observed. When compared with the control growth, the extent of growth inhibition typically ranged from 4 to 5 log.
3. The experiment was repeated, except that the incubation was at 25°C for all steps and for shorter times, with virtually identical results.

### (iv) Conclusions

1. The results of this experiment were precisely as expected, in that growth of the obligately aerobic fungi in a liquid complex medium was almost completely inhibited by the presence of the AGELESS sachets.
2. The results indicate that the treatment procedure with AGELESS sachets is effective at removing dissolved oxygen from the orange juice growth medium.

### Example 2: Growth study of Saccharomyces cerevisiae in apple juice and in orange juice in the presence of AGELESS sachets

### (i) Introduction

Before proceeding to test the activity of AgL in combination with other surfaces, it was essential to study the inhibition of growth of *S. cerevisiae* when incubated in the presence of AGELESS sachets. This experiment, therefore, first analysed growth in the presence and absence of AGELESS sachets in apple juice (AJ) and orange juice (OJ).

### (ii) Methods

1. The method for preparing the device for attaching AgL sachets was as given in the General Procedures above.
2. 400 ml of Norwegian AJ (sterile) or Sainsbury's OJ (sterile) were distributed and treated according to the basic test procedure outlined above - that is, the filled bottles were subjected to a pre-deoxygenation with 2 x 100 ml capacity AGELESS sachets which were replaced after 24 h at 11°C. After that, the media were inoculated to 10 cfu (colony forming units) ml⁻¹ with *S. cerevisiae*.
   Controls were normal media without AGELESS.
3. Incubation was for 7 days at 11°C, after which samples were plated out onto malt agar (MA) plates to determine the extent of growth of *S. cerevisiae* by viable counting.
4. The dissolved oxygen content of control orange juice samples in test bottles treated identically with AGELESS sachets but *without* inoculation was determined at the end of the experiment using an ORBISPHERE Model 3600 analyser capable of detecting dissolved oxygen levels down to 0.01% by volume (0.01mg/l).

### (iii) Results

1. The inhibition of *S. cerevisiae* growth observed in AJ was 0.5 log to 1 log. "0.5 log" means that the AgL-containing bottle had roughly 10^{-0.5} times - about one third - the number of countable cfus observed in the control bottle [without AgL], while "1 log" means that the number was 10⁻¹ times, or one tenth ("2 log" would mean 10⁻² times, or one hundredth, and so on).
2. The inhibition seen in OJ with AgL sachets was 1.5 to 2 log, and this was, surprisingly, more than the inhibition seen in AJ.
3. The dissolved oxygen in the uninnoculated control test bottles was found to have been reduced to 0.1% or below.

### iv) Conclusions

1. AGELESS sachets cause inhibition of growth of *S. cerevisiae* in both apple juice and orange juice.
2. The activity of the sachets is better in orange juice (1.5-2 log) than in apple juice (0.5-1 log). It is not clear why this should be so, but one reason may be that apple juice is a better nutrient medium than orange juice, and therefore inhibition of growth by removal of oxygen is more difficult to achieve.
3. Reduction of dissolved oxygen levels to 0.1% or below is sufficient to cause significant growth inhibition of *S. cerevisiae*.

### Example 3: Effect of AGELESS supernatants on the growth of S. cerevisiae in OJ

### (i) Introduction

This experiment was performed to analyse the effect of supernatants from AGELESS sachets on the growth of *S. cerevisiae* in OJ at 11°C.

### (ii) Methods

1. The method for preparing the device for attaching AgL sachets was as given in the General Procedures.
2. 300 ml of sterile OJ were distributed into Schott Duran bottles, and treated to a pre-deoxygenation as outline above, after which each bottle was inoculated to 10 cfu ml⁻¹ with *S. cerevisiae*. Controls were normal media without AGELESS.
3. Incubation was at 11°C for 7 days depending on the yeast species, after which samples were plated out onto MA plates for viable counting.
4. Supernatants were prepared from a separate set of bottles given the basic pre-deoxygenation treatment and then incubated for a further 8 days at 11°C. Samples were removed, inoculated to 10 cfu/ml with *S. cerevisiae*, and the growth determined after a further incubation at 11°C for 8 days.

### (iii) Results

1. In the presence of AGELESS, 2 log inhibition of growth was observed.
2. The corresponding supernatant showed no growth inhibition.
3. It may therefore be concluded that apart from growth inhibition due to oxygen denial, AGELESS does not have any other effect on yeast growth in OJ.

### Example 4: Effect of AGELESS on the growth of S. cerevisiae in a different orange juice

### (i) Introduction

In order to verify whether the observed effect of anaerobiosis on growth of *S. cerevisiae* in OJ was a general effect in OJ, the effect of anaerobiosis on growth in an alternative source of OJ (Mills' orange juice) was studied.

### (ii) Methods

The experiment described in Example 2 was repeated exactly except that Mills' orange juice was used in place of Sainsbury's orange juice and that the incubation period was 7 days.

### (iii) Results

1. In the presence of AGELESS sachets, the extent of growth of S. cerevisiae in Mills' orange juice was 1.6 log.
2. No significant growth inhibition was observed in the supernatant.

### (iv) Conclusions

1. The effect of anaerobiosis on growth of *S. cerevisiae* in Mills' orange juice was similar to that previously observed in Sainsbury's orange juice.

### Example 5: Effect of AGELESS on the growth of S. cerevisiae in a range of other liquid food products.

### (i) Introduction

This experiment was performed to analyse the effect of anaerobiosis on the growth of *S. cerevisiae* in a range of other liquid food products - mainly other fruit juices, but also milk.

### (ii) Methods

1. The method for preparing the device for attaching AgL sachets was as given in the General Procedures.
2. 300 ml volumes of sterile grapefruit juice, pineapple juice, tomato juice and grape juice and sterile (*i.e.* UHT) milk were distributed in separate sterile Schott Duran bottles and given the basic pre-deoxygenation treatment described above. 10 cfu/ml *S. cerevisiae* were inoculated into each bottle, and the bottles were incubated at 11°C for 8 days.
3. Controls were set up without AGELESS sachets.

### (iii) Results

1. In all of the media tested, significant inhibition of growth of *S. cerevisiae* was observed. The extent of this inhibition was 0.4 log in grapefruit juice, 1 log in milk, 1.2 log in pineapple juice, 1.4 log in tomato juice, and 2.6 log in grape juice.

### (iv) Conclusions

1. In several liquid complex media, significant inhibition of growth of *S. cerevisiae* is observed.
2. The extent of inhibition in grapefruit juice (0.4 log), pineapple juice (1.2 log) and milk (1 log) is similar to that previously observed in apple juice, while the extent of growth inhibition observed in grape juice (2.6 log) and tomato juice (1.4 log) is similar to or greater than that observed in orange juice.

### Example 6: Growth study of a range of yeast species in OJ in the presence of AGELESS sachets

### (i) Introduction

This experiment was performed to analyse the effect of AGELESS sachets on the growth in OJ of a range of yeast species which are common natural contaminants of juices.

### (ii) Methods

1. The method for preparing the device for attaching AgL sachets was as given in the General Procedures.
2. 300 ml of sterile OJ were distributed into Schott Duran bottles, which were given the basic pre-deoxygenation treatment outline above, after which each bottle was inoculated to 10 cfu/ml with one of a range of yeast species (see the Table below). Controls were normal media without AGELESS.
3. Incubation was at 11°C for 7 to 13 days depending on the yeast species, after which samples were plated out onto MA plates for viable counting.

### (iii) Results (see Table 2 below)

1. All of the 13 yeast species examined showed inhibition of growth in the presence of AGELESS in comparison with the controls. However, the extent of inhibition ranged from 1.5 log to 5 log according to the species examined.
2. It may therefore be concluded that this effect is generally applicable to inhibition of yeast growth.

**Table 2**

| Yeast | Growth (in cfus) | | Inhibition (log) |
|---|---|---|---|
| | with AgL | without AgL | |
| *Zygosaccharomyces baill1* | 2.6x10⁵ | 9.0x10⁶ | 1.5 |
| *Candida kruseii* | 1.7x10⁴ | 4.6x10⁶ | 2.5 |
| ****Rhodotorula spp*. | 7.1x10¹ | 5.4x10⁵ | 4.5 |
| **Sporoholomyces spp*. | 5 | 5.4x10⁵ | 5 |
| *Geotrichum candidans* | 3.6x10³ | 1.0x10⁷ | 3.5 |
| **Unidentified (F6 red)* | 3 | 7.8x10⁵ | 5 |
| *Candida parapoiosis* | 2.0x10⁴ | 2.0x10⁶ | 2 |
| **Trichosporon spp*. | 7.5x10¹ | 7.8x10⁴ | 3 |
| *Candida pseudotropicalis* | 2.0x10⁵ | 1.3x10⁷ | 2 |
| *Unidentified (F6 white*) | 5.5x10⁴ | 5.5x10⁶ | 2 |
| *Saccharomyces cerevisiae* | 4.8x10⁵ | 1.0x10⁷ | 1.5 |

| | | | |
|---|---|---|---|
| * These yeasts are obligately aerobic. | | | |

### Example 7: Effect of AgL sachets in combination with an antimicrobial substance immobilized in a matrix on the growth of S. cerevisiae in OJ

Although almost complete growth inhibition of aerobic fungi, and substantial growth inhibition of facultatively anaerobic fungi, has been achieved by the use of AGELESS sachets in a liquid complex medium, it would be significantly advantageous if the extent of growth inhibition achieved could be further enhanced. The following Experiments were therefore performed to determine if the inhibition extent could be improved by the additional use of an antimicrobial agent known to cause significant growth inhibition on its own.

### EXPERIMENT I

### (i) Introduction

A preliminary experiment showed that a surface of antimicrobial substance (AM) immobilised in a matrix and tested in 400 ml OJ inhibited growth of *S. cerevisiae* by giving 1-2.5 log inhibition while giving a supernatant with 0.5 log inhibition. This experiment was performed to determine whether the presence of AGELESS in addition to the surface improved the inhibition further.

In this particular experiment, the AM was benzofuroxan immobilised in a polyacrylamide (PAA) gel.

### (ii) Methods

1. The method for preparing the device for attaching AGELESS sachets is given in the General Procedures.
2. 20mg of AM were immobilised in 20 ml of the matrix in sterile conditions in 500 ml Schott Duran bottles.
3. 300ml of OJ (sterile) were added and given the basic pre-deoxygenation treatment described above. Each was then inoculated with 10 cfu/ml *S. cerevisiae*, and incubated at 11°C for 7 days. Samples were then plated out for viable counting.
4. Controls were set up both with and without AGELESS sachets.

### (iii) Results

1. The control surface with AgL had 2 log inhibition as compared to that without sachets - 5.0x10⁴ cfus with AgL, 7.3x10⁶ cfus without.
2. The test AM-matrix surface on its own produced 0.5 log inhibition (1.2x10⁶ cfus), and that surface in combination with AGELESS sachets produced a 2.5 log inhibition (1.2x10⁴ cfus) when compared to the control surface without AGELESS.

### (iv) Conclusions

1. This experiment indicated that AGELESS sachets when used in combination with an active surface, improved the inhibition observed.
2. The effect, however, seems to be additive - *i.e.* the effect observed in the test surface with AGELESS seems to be due to the sum total of the independent effects of AGELESS and the surface.

### EXPERIMENT II

### (i) Introduction

In the previous experiment it was observed that AGELESS sachets in combination with AM-matrix surfaces improved the inhibition by 2 log compared with AM-matrix. This second experiment was set up to confirm the results, and also to test supernatants from the test surfaces.

### (ii) Methods

1. The methods and procedures used were exactly as in Experiment I.
2. Supernatants were set up for the surfaces on day 7.
3. Controls were set up without the matrix surface, and both with and without AGELESS sachets.

### (iii) Results

1. The control surface with AGELESS showed 2 log inhibition compared to that without AGELESS sachets - 1.6x10⁴ cfus with AgL, 1.7x10⁶ cfus without.
2. The test AM-matrix surface on its own produced a 0.8 log inhibition (3.5x10⁵ cfus) and, in the presence of AGELESS, caused a 2.8 log inhibition (3.1x10³ cfus).
3. None of the supernatants (control and surface) incubated in the absence of AGELESS caused any significant growth inhibition.

### (iv) Conclusions

1. The surfaces were active and the supernatants were inactive in this Experiment.
2. The activity of the surface increased by 2 log when incubated in the presence of AGELESS.
3. Controls with AGELESS caused a 2 log inhibition on their own which was eliminated when the sachets were removed. This indicates that AgL acts only by removing oxygen, and that when oxygen is replaced no inhibition is observed. Thus, AGELESS does not alter the medium such that it would affect the subsequent growth of *S. cerevisiae*.

### Summary of oxygen scavenging experiments

1. Almost complete growth inhibition of a range of aerobic fungi in a liquid complex medium can be achieved by using an oxygen scavenger such as AGELESS sachets.
2. Varying levels of growth inhibition (from 2 log to effectively complete) of yeasts in a liquid complex medium depending on the strain and medium can be achieved by anaerobiosis.
3. Oxygen scavenging inhibits *S. cerevisiae*, causing 2 log inhibition in OJ.
4. Oxygen scavenging has no effect upon the subsequent growth of yeasts in OJ in the presence of O₂.
5. Oxygen scavenging inhibits *S. cerevisiae* growth in a range of liquid food products.
6. The effect of AGELESS is at least additive, and in some cases possibly synergistic, to the activity of an immobilized antimicrobial-matrix surface (producing up to 2.8 log inhibition with an inactive supernatant).

## Claims

1. A method of inhibiting the growth of facultatively anaerobic micro-organisms in contact with a non-sterile liquid complex medium enclosed so as to be substantially out of contact with the ambient atmosphere, the method comprising using an oxygen scavenger to scavenge virtually all free molecular oxygen from the enclosure.

2. A method as claimed in Claim 1, in which one or more of the facultatively anaerobic micro-organisms is a yeast.

3. A method as claimed in Claim 1 or 2, in which the non-sterile liquid complex medium is milk or a milk product, or a fruit juice.

4. A method as claimed in Claim 3, in which the fruit juice is orange juice, grape juice or tomato juice.

5. A method as claimed in any preceding Claim, in which the oxygen scavenger is iron and/or ferrous oxide.

6. A method as claimed in any preceding Claim, in which the liquid complex medium is enclosed in a container in the form of a liquid packaging carton made from a laminate comprising a paperboard layer and inner and outer thermoplastics layers, optionally with one or more oxygen or other barrier layers in the laminate.

7. A method as claimed in any preceding Claim, in which the oxygen scavenger is used in an immobilised form.

8. A method as claimed in Claim 7, in which the oxygen scavenger is immobilised by being attached to, or included within the material of, the or part of the interior surfaces of the enclosure, or is provided as an insert to a cap or other member that sealingly closed the enclosure.

9. A method as claimed in any preceding Claim, in which the free molecular oxygen concentration within the liquid medium is reduced to less than 0.3mg/l.

10. A method as claimed in claim 9, in which the free molecular oxygen concentration within the liquid medium is reduced to less than 0.1mg/l.

11. A method as claimed in any preceding Claim, in which, in addition to the oxygen scavenger, there is employed in contact with the non-sterile liquid medium an antimicrobial substance.

12. A method as claimed in Claim 11, in which the antimicrobial substance is silver or benzofuroxan.

13. A method as claimed in Claim 11 or 12, in which the antimicrobial substance is immobilised.

14. A method as claimed in Claim 13, in which the antimicrobial substance is immobilised by being attached to, or included within the material of, the or part of the interior surfaces of the enclosure.

## Patentansprüche

1. Verfahren zur Hemmung des Wachstums von fakultativ anaeroben Mikroorganismen in Kontakt mit einem nichtsterilen flüssigen komplexen Medium, das so in einen Behälter eingeschlossen ist, daß es im wesentlichen nicht mit der Umgebungsluft in Kontakt steht, wobei das Verfahren die Verwendung eines Sauerstoffängers umfaßt, so daß praktisch der gesamte freie molekulare Sauerstoff aus dem Behälter abgefangen wird.

2. Verfahren gemäß Anspruch 1, wobei es sich bei einem oder mehreren der fakultativ anaeroben Mikroorganismen um eine Hefe handelt.

3. Verfahren gemäß Anspruch 1 oder 2, wobei es sich bei dem nichtsterilen flüssigen komplexen Medium um Milch oder ein Milchprodukt oder einen Fruchtsaft handelt.

4. Verfahren gemäß Anspruch 3, wobei es sich bei dem Fruchtsaft um Orangensaft, Traubensaft oder Tomatensaft handelt.

5. Verfahren gemäß einem der vorstehenden Ansprüche, wobei es sich bei dem Sauerstoffänger um Eisen und/oder Eisen(II)oxid handelt.

6. Verfahren gemäß einem der vorstehenden Ansprüche, wobei das flüssige komplexe Medium in einem Behälter in Form eines Flüssigkeitsverpackungskartons eingeschlossen ist, der aus einem Laminat besteht, das eine Kartonschicht sowie eine innere und eine äußere thermoplastische Schicht umfaßt, wobei in dem Laminat gegebenenfalls eine oder mehrere Sauerstoff- oder andere Sperrschichten vorhanden sind.

7. Verfahren gemäß einem der vorstehenden Ansprüche, wobei der Sauerstoffänger in immobilisierter Form verwendet wird.

8. Verfahren gemäß Anspruch 7, wobei der Sauerstoffänger immobilisiert wird, indem man ihn an die Innenflächen des Behälters oder einen Teil davon bindet oder in deren Material einbaut, oder als Einschub in einen Verschluß oder ein anderes Element, das den Behälter dicht verschließt, bereitgestellt wird.

9. Verfahren gemäß einem der vorstehenden Ansprüche, wobei die Konzentration an freiem molekularem Sauerstoff im flüssigen Medium auf weniger als 0,3 mg/l reduziert wird.

10. Verfahren gemäß Anspruch 9, wobei die Konzentration an freiem molekularem Sauerstoff im flüssigen Medium auf weniger als 0,1 mg/l reduziert wird.

11. Verfahren gemäß einem der vorstehenden Ansprüche, wobei neben dem Sauerstoffänger eine antimikrobielle Substanz in Kontakt mit dem nichtsterilen flüssigen Medium eingesetzt wird.

12. Verfahren gemäß Anspruch 11, wobei es sich bei der antimikrobiellen Substanz um Silber oder Benzofuroxan handelt.

13. Verfahren gemäß Anspruch 11 oder 12, wobei die antimikrobielle Substanz immobilisiert ist.

14. Verfahren gemäß Anspruch 13, wobei die antimikrobielle Substanz immobilisiert wird, indem man sie an die Innenflächen des Behälters oder einen Teil davon bindet oder in deren Material einbaut.

## Revendications

1. Procédé pour inhiber la croissance de micro-organismes facultativement anaérobies en contact avec un milieu liquide complexe non stérile enfermé de façon à se trouver sensiblement isolée de l'atmosphère ambiante, le procédé consistant à utiliser un piège à oxygène pour piéger sensiblement toutes les molécules d'oxygène libre du milieu enfermé.

2. Procédé selon la revendication 1, dans lequel un ou plusieurs des micro-organismes facultativement anaérobies consiste(nt) en une levure.

3. Procédé selon la revendication 1 ou 2, dans lequel le milieu liquide complexe non stérile est du lait ou un produit laitier, ou encore un jus de fruit.

4. Procédé selon la revendication 3, dans lequel le jus de fruit est du jus d'orange, du jus de raisin ou du jus de tomate.

5. Procédé selon l'une quelconque des revendications précédentes, dans lequel le piège à oxygène est du fer et/ou de l'oxyde ferreux.

6. Procédé selon l'une quelconque des revendications précédentes, dans lequel le milieu liquide complexe est enfermé dans un conteneur sous forme d'un carton d'emballage pour liquides constitué d'un produit laminé comprenant une couche de carton et des couches thermoplastiques externes et internes, éventuellement avec une ou plusieurs couches barrières contre l'oxygène ou autre dans le produit laminé.

7. Procédé selon l'une quelconque des revendications précédentes, dans lequel le piège à oxygène est utilisé sous une forme immobilisée.

8. Procédé selon la revendication 7, dans lequel le piège à oxygène est immobilisé en étant lié à, ou intégré au matériau de tout ou partie des surfaces internes du conteneur, ou est présent en tant qu'insert dans un bouchon ou autre élément qui ferme hermétiquement le conteneur fermé.

9. Procédé selon l'une quelconque des revendications précédentes, dans lequel la concentration en oxygène moléculaire libre dans le milieu liquide est réduite à moins de 0,3 mg/l.

10. Procédé selon la revendication 9, dans lequel la concentration en oxygène moléculaire libre dans le milieu liquide est réduite à moins de 0,1 mg/l.

11. Procédé selon l'une quelconque des revendications précédentes, dans lequel, en plus du piège à oxygène, on utilise en contact avec le milieu liquide non stérile une substance antimicrobienne.

12. Procédé selon la revendication 11, dans lequel la substance antimicrobienne est de l'argent ou du benzofuroxane.

13. Procédé selon la revendication 11 ou 12, dans lequel la substance antimicrobienne est immobilisée.

14. Procédé selon la revendication 13, dans lequel la substance antimicrobienne est immobilisée en étant liée à, ou intégré au matériau de tout ou partie des surfaces internes du conteneur fermé.
